# EUROPEAN PATENT SPECIFICATION

(11) **EP 2 910 591 B1**
(45) Date of publication and mention of the grant of the patent: **11.01.2017**
(21) Application number: 15155847.5
(22) Date of filing: 19.02.2015
(51) Int. Cl.: C08G 73/10

(54) **Method of producing polyimide resin, method of producing polyimide coating, method of producing polyamic acid solution, polyimide coating, and polyamic acid solution**
Verfahren zur Herstellung von Polyimidharz, Verfahren zur Herstellung eines Polyimidüberzugs, Verfahren zur Herstellung von Polyamidsäurelösung, Polyimidüberzug und Polyamidsäurelösung
Procédé de production de résine de polyimide, procédé de production d'un revêtement de polyimide, procédé de production d'une solution d'acide polyamique, revêtement de polyimide et solution d'acide polyamique

(30) Priority: 20.02.2014 JP 2014030834
(43) Date of publication of application: 26.08.2015
(73) Proprietor: TOKYO OHKA KOGYO CO., LTD., Kawasaki-shi, Kanagawa 211 (JP)
(72) Inventor: Noda, Kunihiro, KANAGAWA, 211-0012 (JP); Chisaka, Hiroki, KANAGAWA, 211-0012 (JP); Shiota, Dai, KANAGAWA, 211-0012 (JP); Someya, Kazuya, KANAGAWA, 211-0012 (JP)
(74) Representative: Cabinet Plasseraud

(56) References cited:
- JP-A- 2010 168 517
- US-A- 5 166 308
- US-A1- 2010 207 293

## Description

### BACKGROUND OF THE INVENTION

### Field of the Invention

The present invention relates to a method of producing a polyimide resin, a method of producing a polyimide coating, and a method of producing a polyamic acid solution. The present invention further relates to a polyimide coating obtained from the method of producing a polyimide coating. The present invention still further relates to a polyamic acid solution obtained from the method of producing a polyamic acid solution.

### Related Art

A polyimide resin is excellent in heat resistance, mechanical strength, and insulation properties and has properties such as a low dielectric constant, and thus, it has been widely used as an insulating material or a protective material in electric or electronic parts such as various devices and electronic substrates including multilayer wiring substrates. The polyimide resin is typically formed by a heat treatment at a high temperature of a solution of a polyamic acid obtained by polymerizing a tetracarboxylic acid dianhydride component and a diamine component.

As such a method, for example, a method of forming a polyimide coating by heating a coated film composed of a solution in which a polyamic acid is dissolved in a mixture of two or more solvents selected from aprotic polar organic solvents such as N-methyl-2-pyrrolidone, N-ethyl-2-pyrrolidone, N,N-diethylacetamide, and 1,3-dimethylimidazolidinone (see Patent Literatures 1 and 2); and a method of forming a polyimide coating by heating a coated film composed of a solution in which a polyamic acid is dissolved in a solvent including a solvent selected from specified glycol ethers and γ-butyrolactone (see Patent Literature 3) are known.

For example, in accordance with the methods described in Patent Literatures 1 and 2, when forming a polyimide coating by coating the polyamic acid solution and then heating the coated film, a polyimide coating that is excellent in heat resistance and mechanical properties can be produced while suppressing foaming in the coated film. In addition, in accordance with the method described in Patent Literature 3, a polyimide coating that is not only low in hygroscopicity but also excellent in mechanical properties can be produced. A polyimide coating with low hygroscopicity is useful as, for example, an insulating coating for EL devices that do not like moisture absorption.
Patent Literature 1: JP-A-2009-091573
Patent Literature 2: JP-A-2010-168517
Patent Literature 3: JP-A-2013-232314

### SUMMARY OF THE INVENTION

As described above, in accordance with the methods described in Patent Literatures 1 and 2, foaming is suppressed when forming a polyimide coating. But, even by the methods described in Patent Literatures 1 and 2, though foaming is suppressed, it is still caused as well, and more suppression of foaming is demanded when producing a polyimide resin. In addition, in the methods described in Patent Literatures 1 and 2, it is difficult to produce a polyimide resin with low hygroscopicity.

Meanwhile, in the method described in Patent Literature 3, though a polyimide resin with low hygroscopicity can be produced, it is difficult to suppress foaming when producing a polyimide resin.

The present invention has been made in view of the foregoing problems, and an object of the present invention is to provide a method of producing a polyimide resin, in which not only a polyimide resin that is excellent in heat resistance and mechanical properties and low in hygroscopicity can be produced, but also foaming at the time of polyimide resin production can be suppressed.

Another object of the present invention is to provide a method of producing a polyimide coating, in which a polyimide resin that is excellent in heat resistance and mechanical properties and low in hygroscopicity can be produced while suppressing foaming.

A still another object of the present invention is to provide a method of producing a polyamic acid solution, in which not only foaming at the time of polyimide resin production can be suppressed, but also a polyimide resin that is excellent in heat resistance and mechanical properties and low in hygroscopicity is given.

In addition to these, an object of the present invention is to provide a polyimide coating and a polyamic acid solution obtained from these methods, respectively.

### SOLUTION TO PROBLEM

The present inventors have found that the foregoing problems can be solved by heating a polyamic acid obtained from a reaction between a tetracarboxylic acid dianhydride component and a diamine component in a mixed solvent composed of N,N,N',N'-tetramethylurea and at least one solvent selected from specified aprotic polar organic solvents and specified glycol ethers, to yield a polyimide resin, leading to accomplishment of the present invention. Specifically, the present invention provides the following.

A first aspect of the present invention is concerned with a method of producing a polyimide resin, which includes heating a polyamic acid obtained from a reaction between a tetracarboxylic acid dianhydride component and a diamine component in a mixed solvent composed of:
N,N,N',N'-tetramethylurea; and
at least one solvent selected from the group consisting of: aprotic polar organic solvents composed of N-methyl-2-pyrrolidone, N-ethyl-2-pyrrolidone, 1,3-dimethyl-2-imidazolidinone, N,N-dimethylacetamide, N,N-dimethylformamide, hexamethylphosphoramide, and γ-butyrolactone; and glycol ethers composed of a diethylene glycol dialkyl ether, an ethylene glycol monoalkyl ether acetate, a diethylene glycol monoalkyl ether acetate, a propylene glycol monoalkyl ether acetate, and a propylene glycol monoalkyl ether propionate.

A second aspect of the present invention is concerned with a method of producing a polyimide coating, which includes heating a polyimide precursor coating formed by coating on a base substance a polyamic acid solution obtained from a reaction between a tetracarboxylic acid dianhydride component and a diamine component in a mixed solvent composed of:
N,N,N',N'-tetramethylurea; and
at least one solvent selected from the group consisting of: aprotic polar organic solvents composed of N-methyl-2-pyrrolidone, N-ethyl-2-pyrrolidone, 1,3-dimethyl-2-imidazolidinone, N,N-dimethylacetamide, N,N-dimethylformamide, hexamethylphosphoramide, and γ-butyrolactone; and glycol ethers composed of a diethylene glycol dialkyl ether, an ethylene glycol monoalkyl ether acetate, a diethylene glycol monoalkyl ether acetate, a propylene glycol monoalkyl ether acetate, and a propylene glycol monoalkyl ether propionate.

A third aspect of the present invention is concerned with a polyimide coating produced by the method according to the second aspect.

A fourth aspect of the present invention is concerned with a method of producing a polyamic acid solution, which includes allowing a tetracarboxylic acid dianhydride component and a diamine component to react with each other in a mixed solvent composed of:
N,N,N',N'-tetramethylurea; and
at least one solvent selected from the group consisting of: aprotic polar organic solvents composed of N-methyl-2-pyrrolidone, N-ethyl-2-pyrrolidone, 1,3-dimethyl-2-imidazolidinone, N,N-dimethylacetamide, N,N-dimethylformamide, hexamethylphosphoramide, and γ-butyrolactone; and glycol ethers composed of a diethylene glycol dialkyl ether, an ethylene glycol monoalkyl ether acetate, a diethylene glycol monoalkyl ether acetate, a propylene glycol monoalkyl ether acetate, and a propylene glycol monoalkyl ether propionate.

A fifth aspect of the present invention is concerned with a polyamic acid solution produced by the method according to the fourth aspect.

In accordance with the present invention, a method of producing a polyimide resin, in which not only a polyimide resin that is excellent in heat resistance and mechanical properties and low in hygroscopicity can be produced, but also foaming at the time of polyimide resin production can be suppressed, can be provided. In addition, in accordance with the present invention, a method of producing a polyimide coating, in which a polyimide coating that is excellent in heat resistance and mechanical properties and low in hygroscopicity can be produced while suppressing foaming, can be provided. Furthermore, in accordance with the present invention, a method of producing a polyamic acid solution, in which not only foaming at the time of polyimide resin production can be suppressed, but also a polyimide resin that is excellent in heat resistance and mechanical properties and low in hygroscopicity is given, can be provided. In addition to these, in accordance with the present invention, a polyimide coating and a polyamic acid solution obtained from these methods, respectively can be provided.

### DETAILED DESCRIPTION OF THE INVENTION

### First aspect

The first aspect is concerned with a method of producing a polyimide resin, which includes heating a polyamic acid obtained from a reaction between a tetracarboxylic acid dianhydride component and a diamine component in a mixed solvent composed of N,N,N',N'-tetramethylurea and at least one solvent selected from the group consisting of specified aprotic polar organic solvents and specified glycol ethers.

The polyamic acid and the method of heating a polyamic acid to yield a polyimide resin are hereunder explained.

### [Polyamic acid]

In the production method of a polyimide resin according to the first aspect, the polyamic acid which is used for yielding the polyimide resin is not particularly limited and is appropriately selected from polyamic acids which have hitherto been known as a precursor of the polyimide resin.

Examples of the polyamic acid which is suitable include a polyamic acid composed of a structural unit represented by the following formula (1). 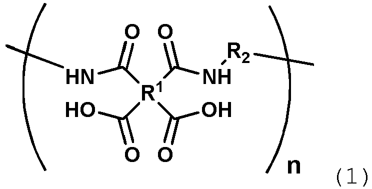 (In the formula (1), R¹ is a tetravalent organic group; R² is a divalent organic group; and n is a number of repeating structural units represented by the formula (1).)

In the formula (1), R¹ and R² are a tetravalent organic group and a divalent organic group, respectively, and the carbon number thereof is preferably 2 to 50, and more preferably 2 to 30. R¹ and R² may be each an aliphatic group or an aromatic group, or a group including these structures in combination. R¹ and R² may include a halogen atom, an oxygen atom, and a sulfur atom in addition to the carbon and hydrogen atoms. In the case where R¹ and R² include an oxygen atom, a nitrogen atom, or a sulfur atom, the oxygen atom, the nitrogen atom, or the sulfur atom may be included in R¹ and R² as a group selected from a nitrogen-containing heterocyclic group, -CONH-, -NH-, -N=N-, -CH=N-, -COO-, -O-, -CO-, -SO-, -SO₂-, -S-, and -S-S-; and the atom is more preferably included in R¹ and R² as a group selected from -O-, -CO-, -SO-, -SO₂-, -S-, and-S-S-.

By heating the polyamic acid composed of the structural unit represented by the foregoing formula (1), a polyimide resin composted of a structural unit represented by the following formula (2) is obtained.

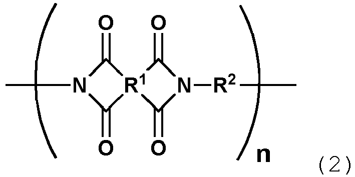

(In the formula (2), R¹ and R² are the same as those in the formula (1); and n is a number of repeating structural units represented by the formula (2).)

The tetracarboxylic acid dianhydride component, the diamine component, and the mixed solvent used for preparing the polyamic acid, and the production method of the polyamic acid are hereunder explained.

### [Tetracarboxylic acid dianhydride component]

The tetracarboxylic acid dianhydride component as a raw material for synthesizing the polyamic acid is not particularly limited so long as the polyamic acid can be formed by the reaction with the diamine component. The tetracarboxylic acid dianhydride component may be appropriately selected from tetracarboxylic acid dianhydrides which have hitherto been used as a raw material for synthesizing the polyamic acid. The tetracarboxylic acid dianhydride component may be an aromatic tetracarboxylic acid dianhydride or an aliphatic tetracarboxylic acid dianhydride. The aromatic tetracarboxylic acid dianhydride is preferred from the standpoint of heat resistance of the resulting polyimide resin. The tetracarboxylic acid dianhydride component may be used in combination of two or more kinds thereof.

Specific examples of the aromatic tetracarboxylic acid dianhydride which is suitable include pyromellitic acid dianhydride, 3,3',4,4'-biphenyl tetracarboxylic acid dianhydride, 2,3,3',4'-biphenyl tetracarboxylic acid dianhydride, 3,3',4,4'-benzophenone tetracarboxylic acid dianhydride, 4,4'-oxydiphthalic acid anhydride, 3,3',4,4'-diphenylsulfone tetracarboxylic acid dianhydride, and the like. Among these, 3,3',4,4'-biphenyl tetracarboxylic acid dianhydride and pyromellitic acid dianhydride are preferred from the standpoints of price, easiness of availability, and the like.

### [Diamine component]

The diamine component as a raw material for synthesizing the polyamic acid is not particularly limited so long as the polyamic acid can be formed by the reaction with the tetracarboxylic acid dianhydride component. The diamine component may be appropriately selected from diamines which have hitherto been used as a raw material for synthesizing the polyamic acid. The diamine component may be an aromatic diamine or an aliphatic diamine. The aromatic diamine is preferred from the standpoint of heat resistance of the resulting polyimide resin. The diamine component may be used in combination of two or more kinds thereof.

Specific examples of the aromatic diamine which is suitable include p-phenylenediamine, m-phenylenediamine, 2,4-diaminotoluene, 4,4'-diaminobiphenyl, 4,4'-diamino-2,2'-bis(trifluoromethyl)biphenyl, 3,3'-diaminodiphenylsulfone, 4,4'-diaminodiphenylsulfone, 4,4'-diaminodiphenyl sulfide, 4,4'-diaminodiphenylmethane, 4,4'-diaminodiphenyl ether, 3,4'-diaminodiphenyl ether, 3,3'-diaminodiphenyl ether, 1,4-bis(4-aminophenoxy)benzene, 1,3-bis(4-aminophenoxy)benzene, 1,3-bis(3-aminophenoxy)benzene, 4,4'-bis(4-aminophenoxy)biphenyl, bis [4- (4-aminophenoxy)phenyl] sulfone, bis[4-(3-aminophenoxy)phenyl]sulfone, 2,2-bis[4-(4-aminophenoxy)phenyl]propane, 2,2-bis[4-(4-aminophenoxy)phenyl]hexafluoropropane, and the like. Among these, p-phenylenediamine, m-phenylenediamine, 2,4-diaminotoluene, and 4,4'-diaminodiphenyl ether are preferred from the standpoints of price, easiness of availability, and the like.

### [Mixed solvent]

The reaction between the tetracarboxylic acid dianhydride component and the diamine component is performed in a mixed solvent composed of N,N,N',N'-tetramethylurea and at least one solvent selected from specified aprotic polar organic solvents and specified glycol ethers. By heating the polyamic acid synthesized in such a mixed solvent to yield the polyimide resin, not only a polyimide resin that is excellent in heat resistance and mechanical properties and low in hygroscopicity can be produced, but also foaming at the time of polyimide resin production can be suppressed.

The N,N,N',N'-tetramethylurea, the aprotic polar organic solvent, and the glycol ether contained in the mixed solvent are hereunder explained.

### (N,N,N',N'-Tetramethylurea)

A boiling point of N,N,N',N'-tetramethylurea is 177°C at atmospheric pressure, and thus, the subject boiling point is relatively low among those of solvents capable of dissolving the tetracarboxylic acid dianhydride component, the diamine component, and the yielded polyamic acid therein. For this reason, even in the case of heating the polyamic acid at a low temperature as, for example, 180°C to produce the polyimide resin, N,N,N',N'-tetramethylurea hardly remains in the yielded polyimide resin. Accordingly, N,N,N',N'-tetramethylurea is less in adverse influences against various physical properties of the resulting polyimide resin.

When a polyamic acid synthesized using only at least one solvent selected from the group consisting of specified aprotic polar organic solvents and specified glycol ethers as described layer is heated to produce a polyimide, there may be the case where foaming of the polyimide is hardly suppressed, or a polyimide resin with low hygroscopicity is hardly obtained.

But, such a problem is dissolved by using a combination of at least one solvent selected from the group consisting of specified aprotic polar organic solvents, specified glycol ethers, and γ-butyrolactone with N,N,N',N'-tetramethylurea.

Furthermore, in the case where the polyimide resin is used as an insulating member, in many cases, a low dielectric constant is also required together with excellent heat resistance and mechanical properties. But, when a polyamic acid synthesized in a solvent not containing N,N,N',N'-tetramethylurea is heated at a low temperature as, for example, 180°C to yield the polyimide resin, there may be the case where a polyimide resin that is inferior in heat resistance or mechanical properties is obtained, or a polyimide resin having a high dielectric constant is obtained. But, when N,N,N',N'-tetramethylurea is contained in the mixed solvent which is used in the first aspect of the present invention, even in the case where the polyamic acid is heated at a low temperature, a polyimide resin having excellent heat resistance and mechanical properties and having a low dielectric constant is easily obtained.

A content of N,N,N',N'-tetramethylurea in the mixed solvent is not particularly limited so long as the effects of the present invention are not impaired. The content of N,N,N',N'-tetramethylurea in the mixed solvent is preferably 5 to 95 mass%, more preferably 10 to 90 mass%, and especially preferably 20 to 80 mass%.

### (Aprotic polar organic solvent)

As the aprotic polar organic solvent which is compounded in the mixed solvent, at least one solvent selected from the group consisting of N-methyl-2-pyrrolidone, N-ethyl-2-pyrrolidone, 1,3-dimethyl-2-imidazolidinone, N,N-dimethylacetamide, N,N-dimethylformamide, hexamethylphosphoramide, and γ-butyrolactone is used.

Such an aprotic polar organic solvent is a good solvent of the polyamic acid. For this reason, in the case of compounding such an aprotic polar organic solvent in the mixed solvent, it is easy to obtain a polyamic acid having a high degree of polymerization, and following this, it is easy to obtain a polyimide resin that is excellent in heat resistance and mechanical properties.

On the other hand, when a trace amount of such an aprotic polar organic solvent remains in the polyimide resin, there may be the case where the resulting polyimide resin is apt to absorb moisture. But, by using such an aprotic polar organic solvent and N,N,N',N'-tetramethylurea in combination, the problem regarding the hygroscopicity of the resulting polyimide resin is dissolved.

Among the aprotic polar organic solvents as explained above, it is preferred to use two or more solvents selected from aprotic polar solvents composed of N-methyl-2-pyrrolidone, N-ethyl-2-pyrrolidone, N,N-dimethylacetamide, and 1,3-dimethyl-2-imidazolidinone from the standpoint of easiness in suppressing foaming at the time of polyimide resin production.

### (Glycol ether)

As the glycol ether which is compounded in the mixed solvent, at least one glycol ether selected from the group consisting of a diethylene glycol dialkyl ether, an ethylene glycol monoalkyl ether acetate, a diethylene glycol monoalkyl ether acetate, a propylene glycol monoalkyl ether acetate, and a propylene glycol monoalkyl ether propionate is used.

Similar to the above-described aprotic polar organic solvent, such a glycol ether is a good solvent of the polyamic acid. For this reason, in the case of compounding such a glycol ether in the mixed solvent, it is easy to obtain a polyamic acid having a high degree of polymerization, and following this, it is easy to obtain a polyimide resin that is excellent in heat resistance and mechanical properties. In addition, in the case of compounding such a glycol ether in the mixed solvent, it is easy to obtain a polyimide resin with low hygroscopicity.

Specific examples of such a glycol ether include diethylene glycol dialkyl ethers such as diethylene glycol dimethyl ether, diethylene glycol diethyl ether, and diethylene glycol ethylmethyl ether; ethylene glycol monoalkyl ether acetates such as ethylene glycol monomethyl ether acetate, ethylene glycol monoethyl ether acetate, and ethylene glycol monobutyl ether acetate; diethylene glycol monoalkyl ether acetates such as diethylene glycol monomethyl ether acetate, diethylene glycol monoethyl ether acetate, and diethylene glycol monobutyl ether acetate; propylene glycol monoalkyl ether acetates such as propylene glycol monomethyl ether acetate, propylene glycol monoethyl ether acetate, propylene glycol monopropyl ether acetate, and propylene glycol monobutyl ether acetate; and propylene glycol monoalkyl ether propionates such as propylene glycol monomethyl ether propionate, propylene glycol monoethyl ether propionate, propylene glycol monopropyl ether propionate, and propylene glycol monobutyl ether propionate.

Among these, propylene glycol monomethyl ether acetate (PGMEA), diethylene glycol ethylmethyl ether (EDM), and the like are especially preferred.

When the glycol ether is used solely, there may be the case where when heating the polyamic acid to yield a polyimide resin, foaming is apt to be caused. But, by using the glycol ether and N,N,N',N'-tetramethylurea in combination, the problem regarding the foaming at the time of polyimide resin production is dissolved.

It is preferred to use such a glycol ether in combination with γ-butyrolactone that is the above-described aprotic organic solvent. In the case of using a mixed solvent including a combination of the glycol ether and γ-butyrolactone, it is easy to obtain a polyimide resin with low hygroscopicity. In the case of using a combination of the glycol ether and γ-butyrolactone, a mass ratio of the both is preferably 5/95 to 95/5, more preferably 10/90 to 90/10, and especially preferably 30/70 to 70/30.

### [Synthesis of polyamic acid]

The tetracarboxylic acid dianhydride component and the diamine component as explained above are allowed to react with each other in the mixed solvent constituted of the above-described specified solvents, thereby synthesizing the polyamic acid. When synthesizing the polyamic acid, though amounts of the tetracarboxylic acid dianhydride component and the diamine component to be used are not particularly limited, the diamine component is used in an amount of preferably 0.50 to 1.50 moles, more preferably 0.60 to 1.30 moles, and especially preferably 0.70 to 1.20 moles per mole of the tetracarboxylic acid dianhydride component.

An amount of the mixed solvent to be used is not particularly limited within a range where the purpose of the present invention is not impaired. Typically, the amount of the mixed solvent to be used is preferably 100 to 4,000 parts by mass, and more preferably from 150 to 2,000 parts by mass based on 100 parts by mass of a total sum of the amount of the tetracarboxylic acid dianhydride component and the amount of the diamine component.

When allowing the tetracarboxylic acid dianhydride component and the diamine component to react with each other, a temperature thereof is not particularly limited so long as the reaction proceeds well. Typically, the reaction temperature between the tetracarboxylic acid dianhydride component and the diamine component is preferably -5°C to 150°C, more preferably 0°C to 120°C, and especially preferably 0°C to 70°C. In addition, though a time for allowing the tetracarboxylic acid dianhydride component and the diamine component to react with each other varies with the reaction temperature, typically, it is preferably 1 to 50 hours, more preferably 2 to 40 hours, and especially preferably 5 to 30 hours.

The polyamic acid solution is obtained by the methods as explained above. In the case of yielding a polyimide resin, the polyamic acid solution may be used as it is. Alternatively, a paste or solid of the polyamic acid obtained from removing at least a part of the mixed solvent from the polyamic acid solution under reduced pressure at a low temperature at which conversion of the polyamic acid into a polyimide resin is not caused may also be used. In addition, a polyamic acid solution in which its solid content concentration has been adjusted by adding an appropriate amount of the mixed solvent, or a solvent capable of being compounded in the mixed solvent, to the polyamic acid solution obtained from the above-described reaction may also be used for preparing a polyimide resin.

### [Method of yielding polyimide resin]

The thus obtained polyamic acid is heated to yield a polyimide resin. On that occasion, a temperature at which the polyamic acid is heated is not particularly limited so long as it is a temperate at which a polyimide resin having a desired performance is obtained. The temperature at which the polyamic acid is heated is preferably 120°C to 350°C, and more preferably 150°C to 350°C. By heating the polyamic acid at a temperature falling within the foregoing range, the polyimide resin can be yielded while suppressing thermal degradation or thermal decomposition of the yielded polyimide resin.

In addition, when heating of the polyamic acid is performed at a high temperature, there may be the case where a large quantity of energy is consumed, or degradation with time of treatment facilities is promoted, and therefore, it is also preferred to perform the heating of the polyamic acid at a lower temperature. Specifically, an upper limit of the temperature at which the polyamic acid is heated is preferably 250°C or lower, more preferably 220°C or lower, and especially preferably 200°C or lower.

In accordance with the production method of a polyimide resin according to the first aspect as explained above, not only a polyimide resin that is excellent in heat resistance and mechanical properties and low in hygroscopicity can be produced, but also foaming at the time of polyimide resin production can be suppressed.

### Second aspect

The second aspect of the present invention is concerned with a method of producing a polyimide coating, which includes heating a polyimide precursor coating formed by coating on a base substance a polyamic acid solution obtained from a reaction between a tetracarboxylic acid dianhydride component and a diamine component in a mixed solvent composed of N,N,N',N'-tetramethylurea and at least one solvent selected from the group consisting of specified aprotic polar organic solvents and specified glycol ethers.

In the production method of a polyimide coating according to the second aspect of the present invention, materials for producing the polyamic acid solution, a production method of the polyamic acid solution, and a heating condition for converting the polyamic acid into the polyimide resin are the same as those in the production method of a polyimide resin according to the first aspect.

A material of the base substance which is used for forming the polyimide coating is not particularly limited so long as thermal degradation or deformation is not caused when heating the polyamic acid solution coated on the base substance. In addition, a shape of the base substance is not particularly limited, too, so long as the polyamic acid solution can be coated. Examples of the base substance include electronic devices such as semiconductor devices, interim products such as multilayer wiring substrates, and various substrates on which electrodes or wirings to be insulated have been formed. In the case where the base substance is a substrate, examples of a material of the substrate which is suitable include glasses; silicon; aluminum (Al); aluminum alloys such as aluminum-silicon (Al-Si), aluminum-copper (Al-Cu), and aluminum-silicon-copper (Al-Si-Cu); titanium (Ti); titanium alloys such as titanium-tungsten (Ti-W); titanium nitride (TiN); tantalum (Ta); tantalum nitride (TaN); tungsten (W); tungsten nitride (WN); and copper.

By forming a polyimide coating on a base substance using an electronic device such as a semiconductor device, a multilayer wiring substance, or the like as the base substance, an insulating coating composed of the polyimide resin can be formed on the electronic device or multilayer wiring substrate. In addition, by forming a polyimide coating using a plate-like substrate as the base substance, a polyimide film can be obtained. The polyimide film formed on the substrate may be used on the substrate as it is, or may be used in a state where it is peeled from the substrate.

A method of coating the polyamic acid solution on the base substance is not particularly limited. Examples of the method of coating the polyamic acid solution on the base substance include a spin coating method, a spray method, a roller coating method, a dipping method, and the like. Although a coating thickness of the coated film of the polyamic acid solution to be formed on the base substance is not particularly limited, it is preferably 0.8 to 350 µm, and more preferably 1.3 to 85 µm. When the polyamic acid solution is coated in such a coating thickness, it is easy to obtain a polyimide coating with desired properties by means of heating for a short time.

Although a coating thickness of the polyimide coating which is produced by the method according to the second aspect is not particularly limited, it is preferably 0.5 to 200 µm, and more preferably 0.8 to 50 µm. The coating thickness of the polyimide coating can be controlled by adjusting a solid content concentration of the polyamic acid solution or the coating thickness of the coated film composed of the polyamic acid solution.

In accordance with the production method of a polyimide coating according to the second aspect of the present invention, a polyimide coating that is excellent in heat resistance and mechanical properties and low in hygroscopicity can be produced while suppressing foaming.

Third aspect

The third aspect of the present invention is concerned with a polyimide coating formed by the method according to the second aspect. Since the polyimide coating according to the third aspect is produced by the method according to the second aspect, it is excellent in heat resistance and mechanical properties and low in hygroscopicity.

The polyimide coating is typically formed by heating a coating composed of an organic solvent solution of a polyamic acid as a precursor coating. At this time, the polyamic acid is soluble in the organic solvent, whereas the polyimide resin is insoluble in the organic solvent. For this reason, when forming the polyimide coating, the organic solvent is confined between molecular chains of the polyimide resin, and the remaining of the organic solvent in a trace amount to some extent in the polyimide coating is inevitable.

But, in the case of using the above-described mixed solvent, the mixed solvent hardly remains in the polyimide coating, or adverse influences of the mixed solvent remaining in the polyimide coating against various physical properties of the polyimide coating are scarce. Therefore, a polyimide coating that is excellent in heat resistance and mechanical properties and low in hygroscopicity is formed.

### Fourth aspect

The fourth aspect of the present invention is concerned with a method of producing a polyamic acid solution, which includes allowing a tetracarboxylic acid dianhydride component and a diamine component to react with each other in a mixed solvent composed of N,N,N',N'-tetramethylurea and at least one solvent selected from the group consisting of specified aprotic polar organic solvents and specified glycol ethers. The production method of a polyamic acid solution according to the fourth aspect is the same as the production method of a polyamic acid solution explained with respect to the first aspect.

In accordance with the production method of a polyamic acid solution according to the fourth aspect, a polyamic acid solution, in which not only foaming at the time of polyimide resin production can be suppressed, but also a polyimide resin that is excellent in heat resistance and mechanical properties and low in hygroscopicity is given, can be obtained. In accordance with the production method of a polyamic acid solution according to the fourth aspect, even in the case of heating at a low temperature as 180°C to yield a polyimide resin, a polyamic acid solution capable of giving a polyimide resin having excellent heat resistance and mechanical properties and having a low dielectric constant is obtained.

### Fifth aspect

The fifth aspect of the present invention is concerned with a polyamic acid solution obtained by the method according to the fourth aspect. The polyamic acid solution according to the fifth aspect is not only able to suppress foaming at the time of polyimide resin production but also gives a polyimide resin that is excellent in heat resistance and mechanical properties and low in hygroscopicity.

In addition, when the polyamic acid solution according to the fifth aspect is used, even in the case of heating at a low temperature as 180°C to yield a polyimide resin, a polyimide resin having excellent heat resistance and mechanical properties and having a low dielectric constant can be produced.

### EXAMPLES

The present invention is hereunder explained in more detail by reference to Examples, but it should not be construed that the present invention is limited to these Examples.

### [Examples 1 to 38 and Comparative Examples 1 to 12]

In the Examples and Comparative Examples, TC1 to TC3 shown below were used as a tetracarboxylic acid dianhydride component. In addition, in the Examples and Comparative Examples, DA1 to DA3 shown below were used as a diamine component.

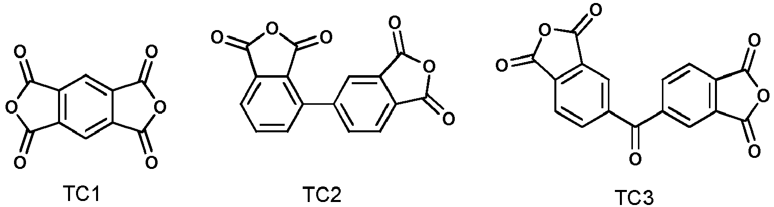

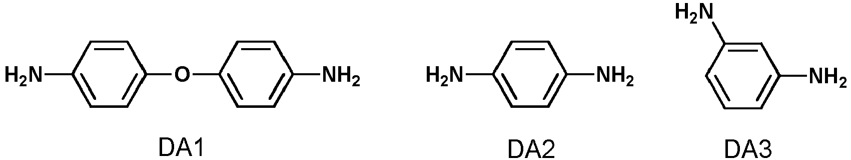

In the Examples and Comparative Examples, when preparing a polyamic acid solution, solvents shown below were used solely or in combination of two kinds or three kinds thereof.

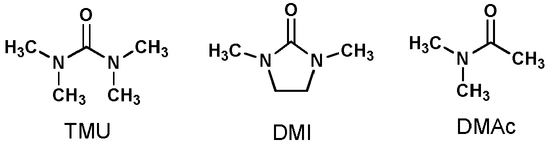

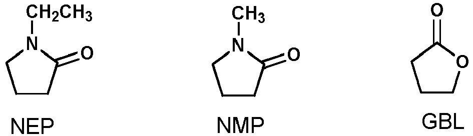

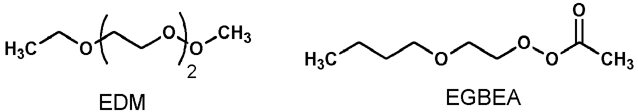

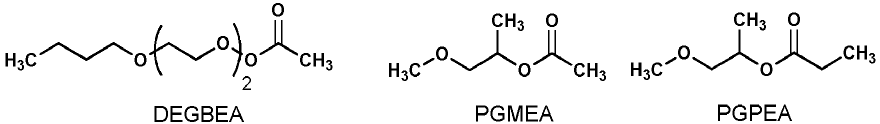

### [Preparation of polyamic acid solution]

A 5 L-volume separable flask equipped with a stirrer, a stirring blade, a reflux cooler, and a nitrogen-introducing tube was charged with a tetracarboxylic acid dianhydride, a diamine, and a solvent in the types and amounts, respectively shown in Table 1, Table 2, or Table 5. Nitrogen was introduced into the flask from the nitrogen-introducing tube, thereby rendering the inside of the flask in a nitrogen atmosphere. Subsequently, the tetracarboxylic acid dianhydride and the diamine were allowed to react with each at the temperature and time shown in Table 1, Table 2, or Table 5 while stirring the contents in the flask, thereby obtaining a polyamic acid solution.

### [Preparation of polyimide coating]

A polyimide coating was formed using the resulting polyamic acid according to the following method, and heat resistance, dielectric constant, tensile elongation, and hygroscopicity of the polyimide coating and film forming properties (foaming) when forming a polyimide coating using the polyamic acid were evaluated.

### (Evaluation of heat resistance)

The resulting polyamic acid solution was coated on a wafer substrate by a spin coater (1H-306S, manufactured by Mikasa Co., Ltd.). The coated film on the wafer substrate was heated for 20 minutes at a baking temperature shown in Table 1, Table 2, or Table 5, thereby forming a polyimide coating having a coating thickness of about 0.9 µm. 5 µg of a sample for evaluating the heat resistance was shaved off from the resulting polyimide coating. A TG curve was obtained using the sample of the polyimide resin for evaluating the heat resistance by the measurement with a thermogravimetry/differential thermal analyzer (TG/DTA-6200, manufactured by Seiko Instruments Inc.). A 5% weight reduction temperature of the sample was obtained from the resulting TG curve. The case where the 5% weight reduction temperature is 300°C or higher was determined to be "good", and the case where it is lower than 300°C was determined to be "bad". The evaluation results of the heat resistance are shown in Table 3, Table 4, and Table 6, respectively.

### (Evaluation of dielectric constant)

The resulting polyamic acid solution was coated on a wafer substrate by a spin coater (1H-306S, manufactured by Mikasa Co., Ltd.). The coated film on the wafer substrate was heated for 20 minutes at a baking temperature shown in Table 1, Table 2, or Table 5, thereby forming a polyimide coating having a coating thickness of about 0.9 µm. A relative dielectric constant of the polyimide resin was measured using the resulting polyimide coating as a sample under a condition at a frequency of 0.1 MHz by a dielectric constant meter (SSM-495, manufactured by SEMILAB JAPAN K.K.). The case where the relative dielectric constant is 4.2 or less was determined to be "good", and the case where it is more than 4.2 was determined to be "bad". The evaluation results of the dielectric constant are shown in Table 3, Table 4, and Table 6, respectively.

### (Tensile elongation)

The resulting polyamic acid solution was coated on a wafer substrate by an applicator (Model TBA-7, manufactured by YOSHIMITSU SEIKI Co., Ltd.). The coated film on the wafer substrate was heated for 20 minutes at a baking temperature shown in Table 1, Table 2, or Table 5, thereby forming a polyimide coating having a coating thickness of about 10 µm. A dumbbell-type test piece having a shape in accordance with the IEC450 Standard was punched out from the resulting polyimide coating, thereby obtaining a test piece for measuring the tensile elongation. A fracture elongation of the polyimide resin was measured using the resulting test piece under a condition at a chuck-to-chuck distance of 20 mm and a tension rate 2 mm/min by a universal testing machine (TENSILON, manufactured by Orientec Co., Ltd.). The case where the fracture elongation is 25% or more was determined to be "good", and the case where it is less than 25% was determined to be "bad". The evaluation results of the fracture elongation are shown in Table 3, Table 4, and Table 6, respectively.

### (Film forming properties (foaming))

The resulting polyamic acid solution was coated on a wafer substrate by an applicator (Model TBA-7, manufactured by YOSHIMITSU SEIKI Co., Ltd.). The coated film on the wafer substrate was heated for 20 minutes at a baking temperature shown in Table 1, Table 2, or Table 5, thereby forming a polyimide coating having a coating thickness of about 10 µm. The resulting polyimide coating was observed through visual inspection. The case where faults such as swelling, crack, and foaming were not substantially observed was determined to be "excellent"; the case where such faults were observed in a range of about 10 to 30% of the entire area of the polyimide coating was determined to be "good"; and the case where such faults were observed in a range of exceeding about 30% of the entire area of the polyimide coating was determined to be "bad". The evaluation results of the film forming properties are shown in Table 3, Table 4, and Table 6, respectively.

### (Hygroscopicity)

The resulting polyamic acid solution was coated on a wafer substrate by an applicator (Model TBA-7, manufactured by YOSHIMITSU SEIKI Co., Ltd.). The coated film on the wafer substrate was heated for 20 minutes at a baking temperature shown in Table 1, Table 2, or Table 5, thereby forming a polyimide coating having a coating thickness of about 10 µm. When subjecting the formed polyimide coating to temperature rise from ordinary temperature to 200°C by means of TDS (thermal desorption spectroscopy), a gas desorbed from the coating was detected using a mass analyzer to measure a detected value of peak M/z = 18 of water, thereby evaluating the hygroscopicity. The case where a total peak intensity is 6.5 x 10⁻⁹ or less was determined to be "good"; the case where a total peak intensity is more than 6.5 × 10⁻⁹ and 7.0 × 10⁻⁹ or less was determined to be "fair"; and the case where a total peak intensity is more than 7.0 × 10⁻⁹ was determined to be "bad". The evaluation results of the hygroscopicity are shown in Table 3, Table 4, and Table 6, respectively.

**[Table 1]**

| | Material of polyamic acid solution | | | | Reaction condition (°C/hr) | Baking temperature (°C) |
|---|---|---|---|---|---|---|
| | Tetracarboxylic acid dianhydride (type/mol/g) | Diamine (type/mol/g) | Solvent | | | |
| | | | TMU (type/mol/g) | Solvent other than TMU (type/mol/g) | | |
| Example | | | | | | |
| 1 | TC1/3/654.4 | DA1/3.36/672.8 | TMU/12.7/1475 | DMI/12.7/1450 | 50/20 | 180 |
| 2 | TC1/3/654.4 | DA1/3.36/672.8 | TMU/12.7/1475 | DMAc/12.7/1106 | 50/20 | 180 |
| 3 | TC1/3/654.4 | DA1/3.36/672.8 | TMU/12.7/1475 | NEP/12.7/1437 | 50/20 | 180 |
| 4 | TC1/3/654.4 | DA1/3.36/672.8 | TMU/12.7/1475 | NMP/12.7/1259 | 50/20 | 180 |
| 5 | TC1/3/654.4 | DA1/3.36/672.8 | TMU/8.50/987 | DMI/8.50/970 | 50/20 | 180 |
| | | | | DMAc/8.50/740 | | |
| 6 | TC1/3/654.4 | DA1/3.36/672.8 | TMU/8.50/987 | DMI/8.50/970 | 50/20 | 180 |
| | | | | NEP/8.50/962 | | |
| 7 | TC1/3/654.4 | DA1/3.36/672.8 | TMU/8.50/987 | DMI/8.50/970 | 50/20 | 180 |
| | | | | NMP/8.50/843 | | |
| 8 | TC1/3/654.4 | DA1/3.36/672.8 | TMU/8.50/987 | DMAc/8.50/740 | 50/20 | 180 |
| | | | | NEP/8.50/962 | | |
| 9 | TC1/3/654.4 | DA1/3.36/672.8 | TMU/8.50/987 | DMAc/8.50/740 | 50/20 | 180 |
| | | | | NMP/8.50/843 | | |
| 10 | TC1/3/654.4 | DA1/3.36/672.8 | TMU/8.50/987 | NEP/8.50/962 | 50/20 | 180 |
| | | | | NMP/8.50/843 | | |
| 11 | TC1/3/654.4 | DA1/3.36/672.8 | TMU/12.7/1475 | GBL/12.7/1093 | 50/20 | 180 |
| 12 | TC1/3/654.4 | DA1/3.36/672.8 | TMU/8.50/987 | GBL/8.50/732 | 50/20 | 180 |
| | | | | EDM/8.50/1260 | | |
| 13 | TC1/3/654.4 | DA1/3.36/672.8 | TMU/8.50/987 | GBL/8.50/732 | 50/20 | 180 |
| | | | | EGBEA/8.50/1362 | | |
| 14 | TC1/3/654.4 | DA1/3.36/672.8 | TMU/8.50/987 | GBL/8.50/732 | 50/20 | 180 |
| | | | | DEGBEA/8.50/1736 | | |
| 15 | TC1/3/654.4 | DA1/3.36/672.8 | TMU/8.50/987 | GBL/8.50/732 | 50/20 | 180 |
| | | | | PGMEA/8.50/1123 | | |
| 16 | TC1/3/654.4 | DA1/3.36/672.8 | TMU/8.50/987 | GBL/8.50/732 | 50/20 | 180 |
| | | | | PGMEP/8.50/1243 | | |

**[Table 2]**

| | Material of polyamic acid solution | | | | Reaction condition (°C/hr) | Baking temperature (°C) |
|---|---|---|---|---|---|---|
| | Tetracarboxylic acid dianhydride (type/mol/g) | Diamine (type/mol/g) | Solvent | | | |
| | | | TMU (type/mol/g) | Solvent other than TMU (type/mol/g) | | |
| Example | | | | | | |
| 17 | TC2/3/882.7 | DA1/3.36/672.8 | TMU/12.7/1475 | DMI/12.7/1450 | 50/20 | 180 |
| 18 | TC3/3/966.7 | DA1/3.36/672.8 | TMU/12.7/1475 | DMI/12.7/1450 | 50/20 | 180 |
| 19 | TC1/3/654.4 | DA2/3.36/672.8 | TMU/12.7/1475 | DMI/12.7/1450 | 50/20 | 180 |
| 20 | TC1/3/654.4 | DA3/3.36/672.8 | TMU/12.7/1475 | DMI/12.7/1450 | 50/20 | 180 |
| 21 | TC1/3/654.4 | DA1/3.36/672.8 | TMU/20.1/2335 | DMI/5.1/582 | 50/20 | 180 |
| 22 | TC1/3/654.4 | DA1/3.36/672.8 | TMU/5.0/581 | DMI/20.5/2340 | 50/20 | 180 |
| 23 | TC1/3/654.4 | DA1/3.36/672.8 | TMU/12.7/1475 | DMI/12.7/1450 | 50/10 | 180 |
| 24 | TC1/3/654.4 | DA1/3.36/672.8 | TMU/12.7/1475 | DMI/12.7/1450 | 50/30 | 180 |
| 25 | TC1/3/654.4 | DA1/3.36/672.8 | TMU/12.7/1475 | DMI/12.7/1450 | 50/20 | 300 |
| 26 | TC1/3/654.4 | DA1/3.36/672.8 | TMU/20.1/2335 | DMAc/5.1/444 | 50/20 | 180 |
| 27 | TC1/3/654.4 | DA1/3.36/672.8 | TMU/5.0/581 | DMAc/20.5/1786 | 50/20 | 180 |
| 28 | TC1/3/654.4 | DA1/3.36/672.8 | TMU/12.7/1475 | DMAc/12.7/1106 | 50/20 | 300 |
| 29 | TC1/3/654.4 | DA1/3.36/672.8 | TMU/20.1/2335 | NMP/5.1/506 | 50/20 | 180 |
| 30 | TC1/3/654.4 | DA1/3.36/672.8 | TMU/5.0/581 | NMP/20.5/2032 | 50/20 | 180 |
| 31 | TC1/3/654.4 | DA1/3.36/672.8 | TMU/12.7/1475 | NMP/12.7/1259 | 50/20 | 300 |
| 32 | TC1/3/654.4 | DA1/3.36/672.8 | TMU/20.1/2335 | DMI/2.6/297 | 50/20 | 180 |
| | | | | NMP/2.6/258 | | |
| 33 | TC1/3/654.4 | DA1/3.36/672.8 | TMU/5.0/581 | DMI/10.3/1176 | 50/20 | 180 |
| | | | | NMP/10.3/1021 | | |
| 34 | TC1/3/654.4 | DA1/3.36/672.8 | TMU/8.5/987 | DMI/8.50/970 | 50/20 | 300 |
| | | | | NMP/8.50/843 | | |
| 35 | TC1/3/654.4 | DA1/3.36/672.8 | TMU/20.1/2335 | GBL/2.6/224 | 50/20 | 180 |
| | | | | EDM /2.6/385 | | |
| 36 | TC1/3/654.4 | DA1/3.36/672.8 | TMU/5.0/581 | GBL/10.3/887 | 50/20 | 180 |
| | | | | EDM/10.3/1527 | | |
| 37 | TC1/3/654.4 | DA1/3.36/672.8 | TMU/8.5/987 | GBL/8.50/732 | 50/20 | 300 |
| | | | | EDM/8.50/1260 | | |
| 38 | TC1/3/654.4 | DA1/3.36/672.8 | TMU/8.5/987 | PGMEA/8.50/1123 | 50/20 | 180 |

**[Table 3]**

| | Heat resistance | Dielectric constant | Tensile elongation | Film forming properties (foaming) | Hygroscopicity |
|---|---|---|---|---|---|
| Example | | | | | |
| 1 | Good | Good | Good | Excellent | Good |
| 2 | Good | Good | Good | Excellent | Good |
| 3 | Good | Good | Good | Excellent | Good |
| 4 | Good | Good | Good | Excellent | Good |
| 5 | Good | Good | Good | Excellent | Good |
| 6 | Good | Good | Good | Excellent | Good |
| 7 | Good | Good | Good | Excellent | Good |
| 8 | Good | Good | Good | Excellent | Good |
| 9 | Good | Good | Good | Excellent | Good |
| 10 | Good | Good | Good | Excellent | Good |
| 11 | Good | Good | Good | Good | Good |
| 12 | Good | Good | Good | Good | Good |
| 13 | Good | Good | Good | Good | Good |
| 14 | Good | Good | Good | Good | Good |
| 15 | Good | Good | Good | Good | Good |
| 16 | Good | Good | Good | Good | Good |

**[Table 4]**

| | Heat resistance | Dielectric constant | Tensile elongation | Film forming properties (foaming) | Hygroscopicity |
|---|---|---|---|---|---|
| Example | | | | | |
| 17 | Good | Good | Good | Excellent | Good |
| 18 | Good | Good | Good | Excellent | Good |
| 19 | Good | Good | Good | Excellent | Good |
| 20 | Good | Good | Good | Excellent | Good |
| 21 | Good | Good | Good | Good | Good |
| 22 | Good | Good | Good | Good | Good |
| 23 | Good | Good | Good | Excellent | Good |
| 24 | Good | Good | Good | Excellent | Good |
| 25 | Good | Good | Good | Excellent | Good |
| 26 | Good | Good | Good | Good | Good |
| 27 | Good | Good | Good | Good | Good |
| 28 | Good | Good | Good | Excellent | Good |
| 29 | Good | Good | Good | Good | Good |
| 30 | Good | Good | Good | Good | Good |
| 31 | Good | Good | Good | Excellent | Good |
| 32 | Good | Good | Good | Good | Good |
| 33 | Good | Good | Good | Good | Good |
| 34 | Good | Good | Good | Excellent | Good |
| 35 | Good | Good | Good | Good | Good |
| 36 | Good | Good | Good | Good | Good |
| 37 | Good | Good | Good | Good | Good |
| 38 | Good | Good | Good | Good | Good |

It is understood that in accordance with Examples 1 to 38, when a polyimide resin is produced by heating a polyamic acid obtained from a reaction between a tetracarboxylic acid dianhydride component and a diamine component in a mixed solvent composed of N,N,N',N'-tetramethylurea and at least one solvent selected from the group consisting of specified aprotic polar organic solvents and specified glycol ethers, a polyimide resin that is excellent in heat resistance and tensile elongation and low in hygroscopicity can be produced while suppressing foaming.

In addition, it is understood that in accordance with Examples 1 to 38, in the case of using a mixed solvent composed of N,N,N',N'-tetramethylurea and at least one solvent selected from the group consisting of specified aprotic polar organic solvents and specified glycol ethers, even in the case of heating a polyamic acid at a low temperature as 180°C, a polyimide resin having a low dielectric constant can be produced.

**[Table 5]**

| | Material of polyamic acid solution | | | | Reaction condition (°C/hr) | Baking temperature (°C) |
|---|---|---|---|---|---|---|
| | Tetracarboxylic acid dianhydride (type/mol/g) | Diamine (type/mol/g) | Solvent | | | |
| | | | TMU (type/mol/g) | Solvent other than TMU (type/mol/g) | | |
| Comparative Example | | | | | | |
| 1 | TC1/3/654.4 | DA1/3.36/672.8 | - | DMI/25.4/2900 | 50/20 | 180 |
| 2 | TC1/3/654.4 | DA1/3.36/672.8 | - | DMAc/25.4/2212 | 50/20 | 180 |
| 3 | TC1/3/654.4 | DA1/3.36/672.8 | - | NEP/25.4/2874 | 50/20 | 180 |
| 4 | TC1/3/654.4 | DA1/3.36/672.8 | - | NMP/25.4/2518 | 50/20 | 180 |
| 5 | TC1/3/654.4 | DA1/3.36/672.8 | - | DMI/12.7/1450 | 50/20 | 180 |
| | | | | DMAc/12.7/1106 | | |
| 6 | TC1/3/654.4 | DA1/3.36/672.8 | - | DMI/12.7/1450 | 50/20 | 180 |
| | | | | NEP/12.7/1437 | | |
| 7 | TC1/3/654.4 | DA1/3.36/672.8 | - | DMI/12.7/1450 | 50/20 | 180 |
| | | | | NMP/12.7/1259 | | |
| 8 | TC1/3/654.4 | DA1/3.36/672.8 | - | DMAc/12.7/1106 | 50/20 | 180 |
| | | | | NEP/12.7/1437 | | |
| 9 | TC1/3/654.4 | DA1/3.36/672.8 | - | DMAc/12.7/1106 | 50/20 | 180 |
| | | | | NMP/12.7/1259 | | |
| 10 | TC1/3/654.4 | DA1/3.36/672.8 | - | NEP/12.7/1437 | 50/20 | 180 |
| | | | | NMP/12.7/1259 | | |
| 11 | TC1/3/654.4 | DA1/3.36/672.8 | - | GBL/25.4/2187 | 50/20 | 180 |
| 12 | TC1/3/654.4 | DA1/3.36/672.8 | - | GBL/12.7/1093 | 50/20 | 180 |
| | | | | EDM/12.7/1882 | | |

**[Table 6]**

| | Heat resistance | Dielectric constant | Tensile elongation | Film forming properties (foaming) | Hygroscopicity |
|---|---|---|---|---|---|
| Comparative Example | | | | | |
| 1 | Good | Bad | Bad | Bad | Fair |
| 2 | Good | Good | Bad | Bad | Fair |
| 3 | Good | Bad | Bad | Bad | Fair |
| 4 | Good | Bad | Bad | Bad | Fair |
| 5 | Good | Good | Bad | Good | Fair |
| 6 | Good | Bad | Bad | Good | Fair |
| 7 | Good | Bad | Bad | Good | Fair |
| 8 | Good | Good | Bad | Good | Fair |
| 9 | Good | Good | Bad | Good | Fair |
| 10 | Good | Bad | Bad | Good | Fair |
| 11 | Good | Bad | Bad | Bad | Fair |
| 12 | Good | Bad | Bad | Bad | Good |

It is understood that in accordance with Comparative Examples 1 to 12, when a polyimide resin is produced by heating a polyamic acid obtained from a reaction between a tetracarboxylic acid dianhydride component and a diamine component in at least one solvent selected from the group consisting of specified aprotic polar organic solvents and specified glycol ethers, the solvent not containing N,N,N',N'-tetramethylurea, it is difficult to obtain satisfactory evaluations in terms of all of heat resistance, tensile elongation, and low hygroscopicity of the resulting polyimide resin while suppressing foaming and low foaming properties when producing the polyimide resin.

## Claims

1. A method of producing a polyimide resin, comprising heating a polyamic acid obtained from a reaction between a tetracarboxylic acid dianhydride component and a diamine component in a mixed solvent composed of:
N,N,N',N'-tetramethylurea; and
at least one solvent selected from the group consisting of: aprotic polar organic solvents composed of N-methyl-2-pyrrolidone, N-ethyl-2-pyrrolidone, 1,3-dimethyl-2-imidazolidinone, N,N-dimethylacetamide, N,N-dimethylformamide, hexamethylphosphoramide, and γ-butyrolactone; and glycol ethers composed of a diethylene glycol dialkyl ether, an ethylene glycol monoalkyl ether acetate, a diethylene glycol monoalkyl ether acetate, a propylene glycol monoalkyl ether acetate, and a propylene glycol monoalkyl ether propionate.

2. The method of producing a polyimide resin according to claim 1, wherein the solvent which is used in combination with N,N,N',N'-tetramethylurea is
two or more solvents selected from aprotic polar solvents composed of N-methyl-2-pyrrolidone, N-ethyl-2-pyrrolidone, N,N-dimethylacetamide, and 1,3-dimethyl-2-imidazolidinone, or
a solvent composed of at least one monomer selected from glycol ethers composed of a diethylene glycol dialkyl ether, an ethylene glycol monoalkyl ether acetate, a diethylene glycol monoalkyl ether acetate, a propylene glycol monoalkyl ether acetate, and a propylene glycol monoalkyl ether propionate, and γ-butyrolactone.

3. The method of producing a polyimide resin according to claim 1 or 2, wherein the heating is performed at 120°C to 350°C.

4. The method of producing a polyimide resin according to any one of claims 1 to 3, wherein a ratio of the mass of N,N,N',N'-tetramethylurea to the mass of the mixed solvent is 5% by mass to 95% by mass.

5. A method of producing a polyimide coating, comprising heating a polyimide precursor coating formed by coating on a base substance a polyamic acid solution obtained from a reaction between a tetracarboxylic acid dianhydride component and a diamine component in a mixed solvent composed of:
N,N,N',N'-tetramethylurea; and
at least one solvent selected from the group consisting of: aprotic polar organic solvents composed of N-methyl-2-pyrrolidone, N-ethyl-2-pyrrolidone, 1,3-dimethyl-2-imidazolidinone, N,N-dimethylacetamide, N,N-dimethylformamide, hexamethylphosphoramide, and γ-butyrolactone; and glycol ethers composed of a diethylene glycol dialkyl ether, an ethylene glycol monoalkyl ether acetate, a diethylene glycol monoalkyl ether acetate, a propylene glycol monoalkyl ether acetate, and a propylene glycol monoalkyl ether propionate.

6. The method of producing a polyimide coating according to claim 5, wherein the heating is performed at 120°C to 350°C.

7. The method of producing a polyimide coating according to claim 5 or 6, wherein an amount of the mixed solvent is 20 to 2,000 parts by mass based on 100 parts by mass of a total sum of the amount of the tetracarboxylic acid dianhydride component and the amount of the diamine component.

8. A method of producing a polyamic acid solution, comprising allowing a tetracarboxylic acid dianhydride component and a diamine component to react with each other in a mixed solvent composed of:
N,N,N',N'-tetramethylurea; and
at least one solvent selected from the group consisting of: aprotic polar organic solvents composed of N-methyl-2-pyrrolidone, N-ethyl-2-pyrrolidone, 1,3-dimethyl-2-imidazolidinone, N,N-dimethylacetamide, N,N-dimethylformamide, hexamethylphosphoramide, and γ-butyrolactone; and glycol ethers composed of a diethylene glycol dialkyl ether, an ethylene glycol monoalkyl ether acetate, a diethylene glycol monoalkyl ether acetate, a propylene glycol monoalkyl ether acetate, and a propylene glycol monoalkyl ether propionate.

9. The method of producing a polyamic acid solution according to claim 8, wherein an amount of the mixed solvent is 20 to 2,000 parts by mass based on 100 parts by mass of a total sum of the amount of the tetracarboxylic acid dianhydride component and the amount of the diamine component.

10. A polyamic acid solution produced by the method according to claim 8 or 9.

## Patentansprüche

1. Verfahren zur Herstellung eines Polyimidharzes, umfassend Erwärmen einer Polyamidsäure, welche durch eine Reaktion zwischen einer Tetracarbonsäuredianhydrid-Komponente und einer Diamin-Komponente in einem gemischten Lösungsmittel erhalten wird, zusammengesetzt aus:
N,N,N',N'-Tetramethylharnstoff, und
mindestens einem Lösungsmittel, ausgewählt aus der Gruppe bestehend aus: aprotischen polaren organischen Lösungsmitteln zusammengesetzt aus N-Methyl-2-pyrrolidon, N-Ethyl-2-pyrrolidon, 1,3-Dimethyl-2-imidazolidinon, N,N-Dimethylacetamid, N,N-Dimethylformamid, Hexamethylphosphoramid und γ-Butyrolacton und Glykolethern zusammengesetzt aus einem Diethylenglykoldialkylether, einem Ethylenglykolmonoalkyletheracetat, einem Diethylenglykolmonoalkyletheracetat, einem Propylenglykolmonoalkyletheracetat und einem Propylenglykolmonoalkyletherpropionat.

2. Verfahren zur Herstellung eines Polyimidharzes nach Anspruch 1, wobei das Lösungsmittel, welches in Kombination mit N,N,N',N'-Tetramethylharnstoff verwendet wird,
zwei oder mehrere Lösungsmittel sind, ausgewählt aus aprotischen polaren Lösungsmitteln zusammengesetzt aus N-Methyl-2-pyrrolidon, N-Ethyl-2-pyrrolidon, N,N-Dimethylacetamid und 1,3-Dimethyl-2-imidazolidinon, oder
ein Lösungsmittel ist, zusammengesetzt aus mindestens einem Monomer, ausgewählt aus Glycolethern zusammengesetzt aus einem Diethylenglykoldialkylether, einem Ethylenglykolmonoalkyletheracetat, einem Diethylenglykolmonoalkyletheracetat, einem Propylenglykolmonoalkyletheracetat und einem Propylenglykolmonoalkyletherpropionat und γ-Butyrolacton.

3. Verfahren zur Herstellung eines Polyimidharzes nach Anspruch 1 oder 2, wobei das Erwärmen bei 120° C bis 350° C durchgeführt wird.

4. Verfahren zur Herstellung eines Polyimidharzes nach einem der Ansprüche 1 bis 3, wobei ein Verhältnis der Masse von N,N,N',N'-Tetramethylharnstoff zu der Masse des gemischten Lösungsmittels 5 Massen-% bis 95 Massen-% beträgt.

5. Verfahren zur Herstellung einer Polyimidbeschichtung, umfassend Erwärmen einer Polyimidvorläuferbeschichtung gebildet durch Beschichten einer Grundsubstanz mit einer Polyamidsäurelösung erhalten aus einer Reaktion zwischen einer Tetracarbonsäuredianhydrid-Komponente und einer Diamin-Komponente in einem gemischten Lösungsmittel zusammengesetzt aus:
N,N,N',N'-Tetramethylharnstoff, und
mindestens einem Lösungsmittel, ausgewählt aus der Gruppe bestehend aus: aprotischen polaren organischen Lösungsmitteln zusammengesetzt aus N-Methyl-2-pyrrolidon, N-Ethyl-2-pyrrolidon, 1,3-Dimethyl-2-imidazolidinon, N,N-Dimethylacetamid, N,N-Dimethylformamid, Hexamethylphosphoramid und γ-Butyrolacton und Glykolethern zusammengesetzt aus einem Diethylenglykoldialkylether, einem Ethylenglykolmonoalkyletheracetat, einem Diethylenglykolmonoalkyletheracetat, einem Propylenglykolmonoalkyletheracetat und einem Propylenglykolmonoalkyletherpropionat.

6. Verfahren zur Herstellung einer Polyimidbeschichtung nach Anspruch 5, wobei das Erwärmen bei 120 °C bis 350 °C durchgeführt wird.

7. Verfahren zur Herstellung einer Polyimidbeschichtung nach Anspruch 5 oder 6, wobei eine Menge des gemischten Lösungsmittels 20 bis 2.000 Massenteile bezogen auf 100 Massenteile einer Gesamtsumme der Menge der Tetracarbonsäuredianhydrid-Komponente und der Menge der Diamin-Komponente beträgt.

8. Verfahren zur Herstellung einer Polyamidsäurelösung, umfassend Reagierenlassen einer Tetracarbonsäuredianhydrid-Komponente und einer Diamin-Komponente miteinander in einem gemischten Lösungsmittel zusammengesetzt aus:
N,N,N',N'-Tetramethylharnstoff, und
mindestens einem Lösungsmittel, ausgewählt aus der Gruppe bestehend aus: aprotischen polaren organischen Lösungsmitteln zusammengesetzt aus N-Methyl-2-pyrrolidon, N-Ethyl-2-pyrrolidon, 1,3-Dimethyl-2-imidazolidinon, N,N-Dimethylacetamid, N,N-Dimethylformamid, Hexamethylphosphoramid und γ-Butyrolacton und Glykolethern zusammengesetzt aus einem Diethylenglykoldialkylether, einem Ethylenglykolmonoalkyletheracetat, einem Diethylenglykolmonoalkyletheracetat, einem Propylenglykolmonoalkyletheracetat und einem Propylenglykolmonoalkyletherpropionat.

9. Verfahren zur Herstellung einer Polyamidsäurelösung nach Anspruch 8, wobei eine Menge des gemischten Lösungsmittels 20 bis 2.000 Massenteile bezogen auf 100 Massenteile einer Gesamtsumme der Menge der Tetracarbonsäuredianhydrid-Komponente und der Menge der Diamin-Komponente beträgt.

10. Polyamidsäurelösung, hergestellt durch das Verfahren nach Anspruch 8 oder 9.

## Revendications

1. Procédé de production d'une résine de polyimide, comprenant le chauffage d'un acide polyamique obtenu à partir d'une réaction entre un composant dianhydride d'acide tétracarboxylique et un composant diamine dans un solvant mixte composé :
de laN,N,N',N'-tétraméthylurée ; et
d'au moins un solvant choisi dans le groupe constitué : des solvants organiques polaires aprotiques composés de la N-méthyl-2-pyrrolidone, de la N-éthyl-2-pyrrolidone, de la 1,3-diméthyl-2-imidazolidinone, du N,N-diméthylacétamide, du N,N-diméthylformamide, de l'hexaméthylphosphoramide et de la γ-butyrolactone ;
et des éthers de glycol composés d'un diéthylène glycol dialkyl éther, d'un acétate d'éthylène glycol monoalkyl éther, d'un acétate de diéthylène glycol monoalkyl éther, d'un acétate de propylène glycol monoalkyl éther et d'un propionate de propylène glycol monoalkyl éther.

2. Procédé de production d'une résine de polyimide selon la revendication 1, dans lequel le solvant qui est utilisé en combinaison avec la N,N,N',N'-tétraméthylurée est
deux ou plus de deux solvants choisis parmi les solvants polaires aprotiques composés de la N-méthyl-2-pyrrolidone, de la N-éthyl-2-pyrrolidone, du N,N-di-méthylacétamide et de la 1,3-diméthyl-2-imidazolidinone, ou
un solvant composé d'au moins un monomère choisi parmi les éthers de glycol composés d'un diéthylène glycol dialkyl éther, d'un acétate d'éthylène glycol monoalkyl éther, d'un acétate de diéthylène glycol monoalkyl éther, d'un acétate de propylène glycol monoalkyl éther et d'un propionate de propylène glycol monoalkyl éther, et la γ-butyrolactone.

3. Procédé de production d'une résine de polyimide selon la revendication 1 ou 2, dans lequel le chauffage est réalisé à une température de 120 °C à 350 °C.

4. Procédé de production d'une résine de polyimide selon l'une quelconque des revendications 1 à 3, dans lequel un rapport entre la masse de N,N,N',N'-tétra-méthylurée et la masse du solvant mixte est de 5 % en masse à 95 % en masse.

5. Procédé de production d'un revêtement de polyimide, comprenant le chauffage d'un revêtement précurseur de polyimide formé par le revêtement sur une substance de base d'une solution de acide polyamique obtenue à partir d'une réaction entre un composant dianhydride d'acide tétracarboxylique et un composant diamine dans un solvant mixte composé :
de laN,N,N',N'-tétraméthylurée ; et
d'au moins un solvant choisi dans le groupe constitué : des solvants organiques polaires aprotiques composés de la N-méthyl-2-pyrrolidone, de la N-éthyl-2-pyrrolidone, de la 1,3-diméthyl-2-imidazolidinone, du N,N-diméthylacétamide, du N,N-diméthylformamide, de l'hexaméthylphosphoramide et de la γ-butyrolactone ;
et des éthers de glycol composés d'un diéthylène glycol dialkyl éther, d'un acétate d'éthylène glycol monoalkyl éther, d'un acétate de diéthylène glycol monoalkyl éther,
d'un acétate de propylène glycol monoalkyl éther et d'un propionate de propylène glycol monoalkyl éther.

6. Procédé de production d'un revêtement de polyimide selon la revendication 5, dans lequel le chauffage est réalisé à une température de 120 °C à 350 °C.

7. Procédé de production d'un revêtement de polyimide selon la revendication 5 ou 6, dans lequel une quantité du solvant mixte est de 20 à 2000 parties en masse sur la base de 100 parties en masse d'une somme totale de la quantité du composant dianhydride d'acide tétracarboxylique et de la quantité du composant diamine.

8. Procédé de production d'une solution d'acide polyamique, comprenant le fait de laisser réagir un composant dianhydride d'acide tétracarboxylique et un composant diamine l'un avec l'autre dans un solvant mixte composé :
de laN,N,N',N'-tétraméthylurée ; et
d'au moins un solvant choisi dans le groupe constitué : des solvants organiques polaires aprotiques composés de la N-méthyl-2-pyrrolidone, de la N-éthyl-2-pyrrolidone, de la 1,3-diméthyl-2-imidazolidinone, du N,N-diméthylacétamide, du N,N-diméthylformamide, de l'hexaméthylphosphoramide et de la γ-butyrolactone ;
et des éthers de glycol composés d'un diéthylène glycol dialkyl éther, d'un acétate d'éthylène glycol monoalkyl éther, d'un acétate de diéthylène glycol monoalkyl éther, d'un acétate de propylène glycol monoalkyl éther et d'un propionate de propylène glycol monoalkyl éther.

9. Procédé de production d'une solution d'acide polyamique selon la revendication 8, dans lequel une quantité du solvant mixte est de 20 à 2000 parties en masse sur la base de 100 parties en masse d'une somme totale de la quantité du composant dianhydride d'acide tétracarboxylique et de la quantité du composant diamine.

10. Solution d'acide polyamique produite par le procédé selon la revendication 8 ou 9.
